# EUROPEAN PATENT SPECIFICATION

(11) **EP 0 593 273 B1**
(45) Date of publication and mention of the grant of the patent: **12.07.2000**
(21) Application number: 93308149.9
(22) Date of filing: 13.10.1993
(51) Int. Cl.: H04B 1/20

(54) **An electronic appliances control apparatus**
Steuergerät für elektronische Geräte
Appareil de commande de dispositifs électroniques

(30) Priority: 13.10.1992 JP 30039192
(43) Date of publication of application: 20.04.1994
(73) Proprietor: SONY CORPORATION, Tokyo (JP)
(72) Inventor: Tanaka, Shigeo, c/o Sony Corporation, Shinagawa-ku, Tokyo (JP)
(74) Representative: Nicholls, Michael John

(56) References cited:
- EP-A- 0 390 041
- EP-A- 0 482 952
- EP-A- 0 505 006
- EP-A- 0 512 604
- GB-A- 2 191 643
- GB-A- 2 204 755
- US-A- 4 337 480
- US-A- 4 771 283
- PATENT ABSTRACTS OF JAPAN vol. 16, no. 469 (E-1271) 29 September 1992 & JP-A-41 067 640 (SHARP CORP)
- PATENT ABSTRACTS OF JAPAN vol. 15, no. 54 (E-1031) 8 February 1991 & JP-A-02 283 117 (SONY CORP)
- PATENT ABSTRACTS OF JAPAN vol. 15, no. 284 (E-1091) 18 July 1991 & JP-A-03 098 397 (MITSUBISHI ELECTRIC CORP)

## Description

This invention relates to an audio-visual control apparatus which is suitable for an audio-visual apparatus to display video signals outputted from, for example, a video tape recorder (VTR) or a laser disc player (LDP).

To control AV (audio-visual) appliances, for instance, it has been proposed to use a D2B (digital data bus) bus. In case where AV appliances are connected to an AV center with the use of a D2B bus, however, it is inevitably required to confirm the presence of the connected electronic appliances by initializing them.

According to the conventional technology of the type described above, such initialization process is apt to become a source of trouble. Electronic appliances, when mistakenly initialized, need to be set up again from the start, requiring troublesome operation.

In case where connected electronic appliances are not capable of executing functions, it is not possible to make the function of other connected appliances available.

Thus, operations to change addresses allocated to electronic appliances tend to become complicated and accordingly difficult for a user to understand.

EP-A-0,390,041 discloses an AV apparatus which displays a menu listing all connected AV devices superimposed on a default video display.

It is a primary object of the present invention to provide an audio-visual control apparatus which ensures right and correct connection of appliances.

It is another object of the present invention to provide an audio-visual control apparatus assured of improved operability.

According to the present invention, there is provided an audio-visual control apparatus comprising:
control means connected to a plurality of audio-visual appliances for sending control commands to each of said audio-visual appliances; and
selection means connected via respective inputs to each of said plural audio-visual appliances for selecting one of said inputs and thereby one of the output signals of said audio-visual appliances; and
means, connected to said solution means, for displaying the selected one of said outputs of said appliances; characterised by
means, connected to said control means, for displaying the name of an appliance whose output is considered to be connected to the input selected by said selection means, so as to identify the displayed output.

The invention will be further described by way of example with reference to the accompanying drawings, in which:-
FIG. 1 is a block diagram showing the structure of an audio-visual control apparatus embodying the present invention;
FIG. 2 is a drawing showing a screen of the CRT 10 in the embodiment shown in FIG. 1;
FIG. 3 is a flow chart showing operations of the embodiment shown in FIG. 1;
FIG. 4 is a block diagram showing the structure of an audio-visual system employing an audio-visual control apparatus according to the present invention;
FIG. 5 is a flow chart showing operations of the embodiment shown in FIG. 1;
FIG. 6 is a block diagram showing the execution of an address-confirming method according to the present invention;
FIG. 7 is an address-confirming menu displayed on CRT 10 shown in FIG. 6;
FIG. 8 is a flow chart showing operations of the audio-visual system executing address-confirming operations according to the present invention; and
FIG. 9 is a block diagram showing the structure of a conventional video system.

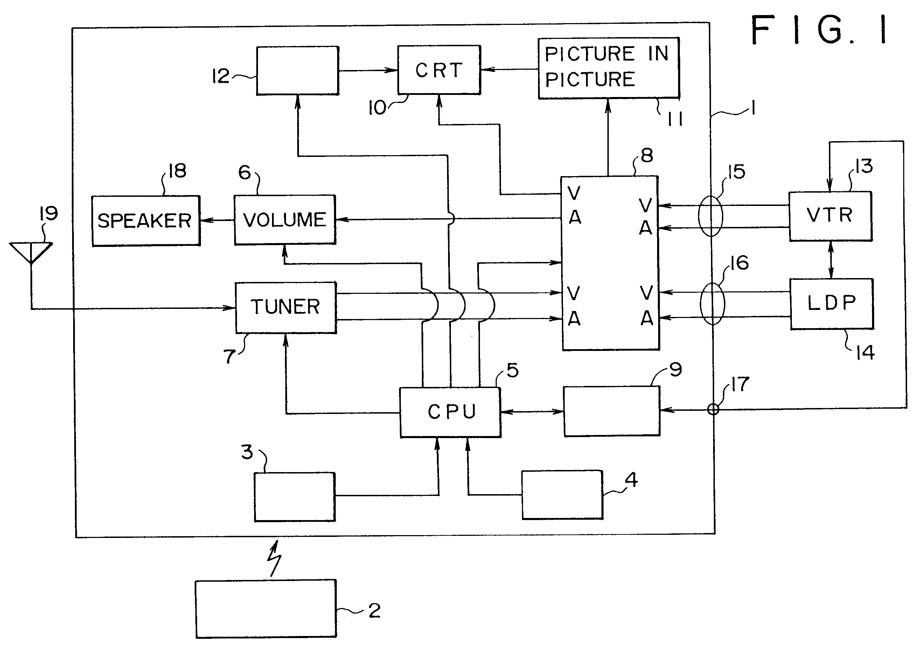

Fig. 1 is a block diagram showing the structure of an audio-visual control apparatus embodying the present invention. Designated by a reference numeral 2 is a remote controller which has a power switch for controlling the power source of an AV (audio-visual) center 1, a channel button for selecting a TV channel, a volume adjusting button for adjusting an audio level, a selection switch for selecting from video/audio signals inputted from a tuner 7, video/audio signals inputted to an external input terminal 15 or inputted to an external input terminal 16 video signals to be displayed on a CRT (cathode ray tube) 10 and a control section for controlling appliances connected to the external input terminals 15 and 16 and emits from a built-in light emission diode IR (infra-red) light corresponding to a switch (button) operated. A light receiving section 3 converts IR light emitted from the remote controller 2 into electric signals which supplies to a CPU (central processing unit) 5. An input section 4 has switches (buttons) corresponding to those of the remote controller 2 and is operated to control the power source of the AV center 1, select a TV channel and control electronic appliances connected to the external input terminals 15 and 16.

When either the remote controller 2 or the operation section 4 is operated, CPU 5 controls a volume 6, a tuner 7, a selection section 8, a control section 9 and a message display circuit 12 for displaying a message. Under the control of the CPU 5, the volume 6 adjusts an audio volume level outputted from a speaker 18 when it is operated by either the remote controller 2 or a volume adjusting switch of the input section 4. The tuner 7 selects a desired frequency band (channel) from TV signals supplied from an antenna 19, picks up and supplies video/audio signals to the CRT 10 and the speaker 18 through the selection section 8.

The control section 9 is serially connected to the VTR (video tape recorder) 13 and the LDP (laser disc player) 14 through a control signal output terminal 17 and controls the power source of VTR 13 and the LDP 14 and the operational mode of video/audio replaying in response to operations of the remote controller 2 or the input section 4.

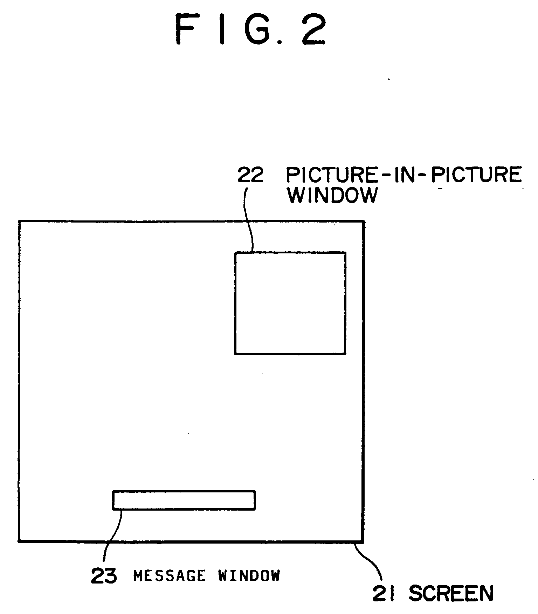

Controlled by the CPU 5, the selection section 8 selects one of video signals outputted from the tuner 7 or signals fed to the external input terminal 15 or to the external input terminal 16 and sends the selected one to the CRT 10 and the speaker 18. Furthermore, the selection section 8 selects one of video signals outputted through the external input terminals 15 and 16 from the VTR 13 and the LDP 14 controlled by the control section 9 and sends the selected one to a P-in-P (picture in picture) circuit 11. The P-in-P circuit 11 converts video signals supplied from the selection section 8 into P-in-P video signals. In other words, the P-in-P circuit 11 converts video signals supplied from the selection section 8 into P-in-P video signals corresponding to them to be displayed in a pre-set P-in-P window 22 on the screen 21 of the CRT 10 shown in Fig. 2.

Under the control of the CPU 5, the message display circuit 12, after connecting the VTR 13 and the LDP 14 to the external input terminals 15 and 16, outputs character data to the AV center 1 to display pre-set messages in a message window 23 on the screen 21 of the CRT 10 in case its initialization is executed to identify (recognize) appliances connected to the external input terminals 15 and 16.

As shown in Fig. 2, the CRT 10 displays on its screen 21 an image corresponding to video signals outputted from the selection section 8 and displays in the P-in-P window 22 and the message window 23 on the screen 21 video signals, an image and a message corresponding to video signals and character data supplied from the P-in-P circuit 11 and the message display circuit 12, respectively.

In the normal operation mode, one of video signals outputted from the tuner 7, video signals supplied to the external input terminal 15 or video signals supplied to the external input terminal 16 is selected by the selection section 8 and thus-selected video signal supplied to the CRT 10 to display on the screen 21 of the CRT 10 an image corresponding to that signal.

To execute its initialization after the VTR 13 and the LDP 14 are connected to the external input terminals 15 and 16, the AV center 1 is set into its initialization mode from the remote controller 2 or the input section 4. When the AV center 1 is set into its initialization mode, the message display circuit 12 causes the CRT 10 to display in the message window 23 the names (appliance identification) of appliances which can be connected to the AV center 1. Thus, it becomes possible to select an appliance name "VTR" connected to (considered connected to) either one of the external input terminals 15 and 16 (15, for instance) and enable the selection section 8 to select video signals to input to the external input terminal 15 by operating either the remote controller 2 or the selection switch of the input section 4. Then, an appliance connected to (considered connected to) the external input terminal 15 selected earlier, namely the VTR 13, is enabled to output video signals (the VTR 13 is caused to start reproducing video signals) by operating the remote controller 2 or the control switch of the input section 4.

When the remote controller 2 is operated at this stage, the light emission diode built in the remote controller 2 emits IR light corresponding to the operation. This IR light is receiyed at the light receiving section 3 to be converted into electric signals which are fed to the CPU 5. Likewise, electric signals corresponding to operation of the input section 4 are fed to the CPU 5.

When either the remote controller 2 or the input section 4 is operated as described above, the CPU 5 outputs control signals to the selection section 8 to selectively output to the P-in-P circuit 11 video signals inputted to the selected external terminal 15 and outputs control signals to the control section 9 to control an appliance connected to (considered connected to) the selected external input terminal 15, namely the VTR 13, to output video signals. In response to control signals outputted from the CPU 5, the selection section 8 is caused to selectively send to the P-in-P circuit 11 video signals inputted to the external input terminal 15. At the same time, the control section 9 is caused to, in response to control signals outputted from the CPU 5, output control signals to the VTR 13 through the control signal output terminal 17to cause the VTR 13 to output video signals (the VTR 13 is caused to start reproducing video signals) and reproduce video signals.

In the P-in-P circuit 11, video signals fed from the selection section 8 are converted into P-in-P video signals to be outputted to the CRT 10.

Meanwhile, the CPU 5 outputs control signals to the message display circuit 12 to confirm that an image outputted to the CRT 10 from the P-in-P circuit 11 is corresponding to video signals outputted from an appliance corresponding to the pre-selected appliance name "VTR," namely the VTR 13, and output a row of characters in a form of message reading, for example, "This is VTR." In other words, the message display circuit 12 is controlled to output a row of characters reading "This is VTR." to the CRT 10.

A P-in-P image corresponding to P-in-P video signals outputted from the P-in-P circuit 11, namely video signals inputted to the external input terminal 15, is displayed in the P-in-P window 22 on the CRT 10 and a row of character outputted from the message display circuit 12 indicating "This is VTR." is displayed in the message window 23.

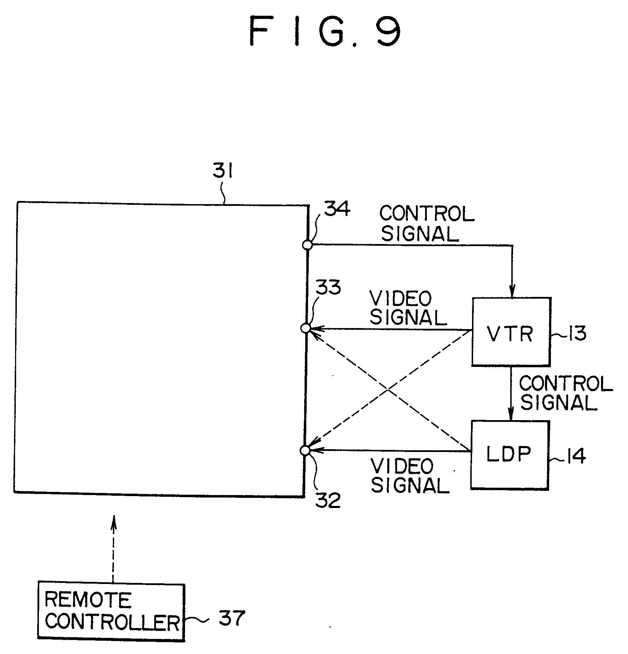

When the VTR 13 is not connected to the external input terminal 15 and connected incorrectly to the external input terminal 16 (as indicated by a dotted line in Fig. 9), video signals are outputted from the VTR 13 but to be selected at the selection section 8 to be outputted to the to the P-in-P circuit 11 are video signals inputted to the external input terminal 15. As video signals are thus not inputted to the external input terminal 15 in this case, the P-in-P window 22 remains blank (in a pre-set color like blue, for example).

Thus, it can be judged easily from a message (a row of characters) and an image displayed in the P-in-P window 22 whether the VTR 13 is connected to the external input terminal 15 or not.

Next, the message display circuit 12 causes the CRT 10 to display in the message window 23 the name of an appliance (appliance name) which can be connected to the AV center. It is now possible to select the name of an appliance "LDP" connected to (considered connected to) either of the external input terminals 15 and 16, namely the external input terminal 16 this time, by operating either the remote controller 2 or the selection switch of the input section 4. Then, either the remote controller 2 or the control switch of the input section 4 is operated to cause an appliance connected to (considered connected to) the external input terminal 16 selected earlier, namely the LDP 14, to output video signals (the LDP 14 is caused to start reproducing video signals).

When either the remote controller 2 or the input section 4 is operated as described above, the CPU 5 outputs control signals to the selection section 8 to selectively output to the P-in-P circuit 11 video signals inputted to the selected external input terminal 16 and outputs control signals to the control section 9 to control an appliance connected to (considered connected to) the selected external input terminal 16, namely the LDP 14, to output video signals. In response to control signals outputted from the CPU 5, the selection section 8 is caused to selectively send to the P-in-P circuit 11 video signals inputted to the external input terminal 16. At the same time, the control section 9 is caused to, in response to control signals outputted from the CPU 5, output control signals to the LDP 14 through the control signal input terminal 17 to cause the LDP 14 to output video signals (the LDP 14 is caused to start reproducing video signals) and start reproducing video signals.

In the P-in-P circuit 11, video signals fed from the selection section 8 are converted into P-in-P video signals to be outputted to the CRT 10.

Meanwhile, the CPU 5 outputs control signals to the message display circuit 12 to confirm that an image outputted to the CRT 10 from the P-in-P circuit 11 is corresponding to video signals outputted from an appliance corresponding to the pre-selected appliance name "LDP," namely the LDP 14, and output a row of characters in a form of message reading, for example, "This is LDP." In other words, the message display circuit 12 is controlled to output a row of characters reading "This is LDP." to the CRT 10.

A P-in-P image corresponding to P-in-P video signals outputted from the P-in-P circuit 11, namely video signals inputted to the external input terminal 16, is displayed in the P-in-P window 22 on the CRT 10 and a row of character outputted from the message display circuit 12 reading "This is LDP." is displayed in the message window 23.

When the LDP 14 is not connected to the external input terminal 16 and connected incorrectly to the external input terminal 15 (as indicated by a dotted line in the drawing), video signals are outputted from the LDP 14 but video signals selected at the selection section 8 and outputted to the P-in-P circuit 11 are video signals inputted to the external input terminal 16. As video signals are thus not inputted to the external input terminal 16 in this case, the P-in-P window 22 remains blank (in a pre-set color like blue, for example).

Thus, it can be judged easily from a message (a row of characters) and an image displayed in the P-in-P window 22 whether the LDP 14 is connected to the external input terminal 16 or not.

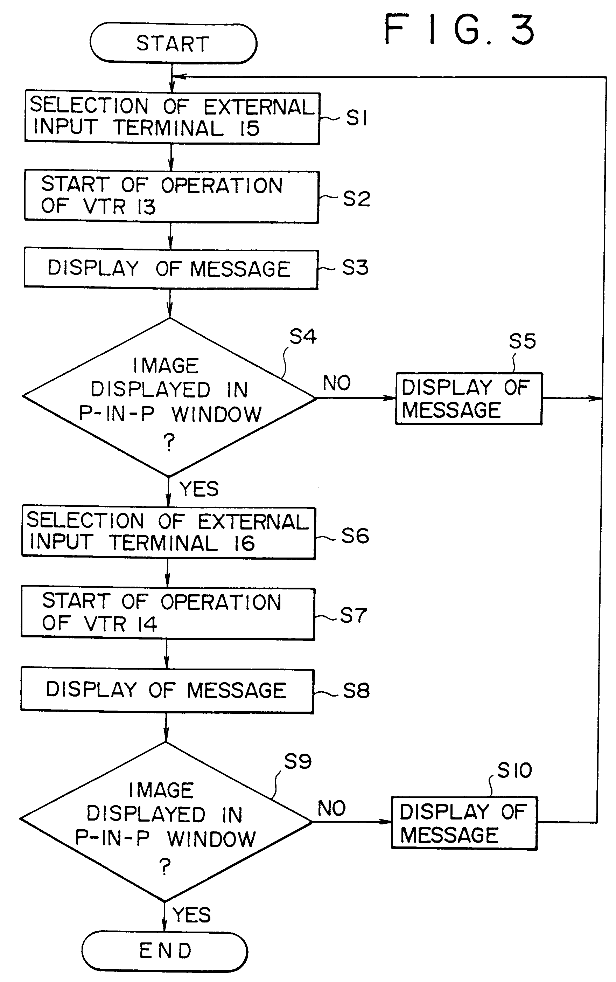

The operation of the above-described audio-visual control apparatus now will be explained with reference to a flow chart shown in Fig. 3. In Step S1 in initialization mode, video signals inputted to the external input terminal 15 out of the external input terminals 15 and 16 are selected. Outputting of video signals from the VTR 13 considered connected to the external input terminal 15 selected in Step S1, namely reproduction of video signals by the VTR 13, is started in Step S2, with the process shifting to Step S3 where a row of characters (message) reading "This is VTR." is displayed in the message window 23 of the screen 21. In Step S4, it is judged whether an image is displayed in the P-in-P window 22. When the P-in-P window 22 is judged in Step S4 to be displaying no image, namely when video signals outputted from the VTR 13 are not fed to the external input terminal 15 with the VTR 13 not connected to the external input terminal 15, the process shifts to Step S5 to display in the message window 23 a row of characters telling a user the state of the current connection between the AV center 1 and the VTR 13 in a message reading "VTR is not correctly connected. Check connection." After this, the process returns to Step S1. This process is repeated from Step S1 to Step S5 until the P-in-P window 22 turns out to display an image in Step S4.

When the P-in-P window 22 is judged to be displaying an image in Step S4, video signals inputted to the other of the external input terminals 15 and 16, which was not selected in Step S1, are now selected in Step S6. In Step S7, outputting of video signals from the LDP 14 considered connected to the external input terminal 16 selected in Step S6, namely reproduction of video signals by the external LDP 14, is started in Step S7, shifting the process to Step S8 where a row of characters (message) reading "This is LDP." is displayed in the message window 23 on the screen 21. In Step S9, it is judged whether the P-in-P window 22 is displaying an image or not. When the P-in-P window 22 is judged to be displaying no image in Step S9, namely when video signals outputted from the LDP 14 are not fed to the external input terminal 16 with the LDP 14 not connected to the external input terminal 16, the process shifts to Step S10 to display in the message window 23 a row of characters telling a user the state of the current connection between the AV center 1 and LDP 14 in a message reading "LDP is not correctly connected. Check connection." After this, the process returns to Step S1. This process is repeated from Step S1 to Step S10 until the P-in-P window 22 turns out to display an image in Step S4 and S9.

When the P-in-P window 22 is judged in Step S4 and Step S9 to be displaying an image, the process is terminated.

Since video signals outputted from an appliance are displayed in the P-in-P window and confirmed as described above, correct connection of appliances can be realized easily.

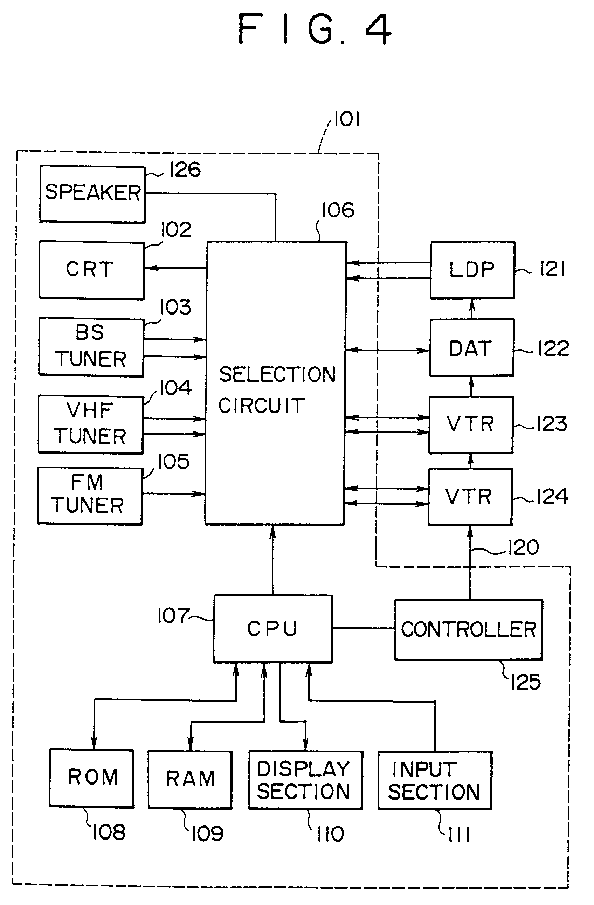

Fig. 4 is a block diagram showing the structure of an AV (audio-visual) system employing an audio-visual control apparatus of the present invention. In this embodiment of the present invention, an LDP 121, a DAT (digital audio tape ) 122 and VTRs 123 and 124 as electronic appliances are connected to an AV center 101 through a bus 120 which cascades them.

The AV center 101 has built therein a BS (broadcast satellite) tuner 103, a VHF tuner 104 and an FM tuner 105 which are connected to a selection circuit 106 together with the LDP 121, the DAT 122 and the VTRs 123 and 124 as connected external electronic appliances. The selection circuit 106 also has connected thereto a CRT 102 and a speaker 126 which display and output signals from either one of the above-described electronic appliances. Under the control of a CPU 107, this selection circuit 106 can send out either one of inputs to either one of the output appliances, respectively. Designated by a reference numeral 125 is a controller.

A ROM 108 stores in memory programs and desired data necessary to make the CPU 107 functioning. A RAM 109 stores in memory, as required, necessary data for desired functioning. A display section 110, composed of a lamp, an LED and an LCD, is used to display desired messages. An input section 111, including switches and buttons, is operated to input desired commands.

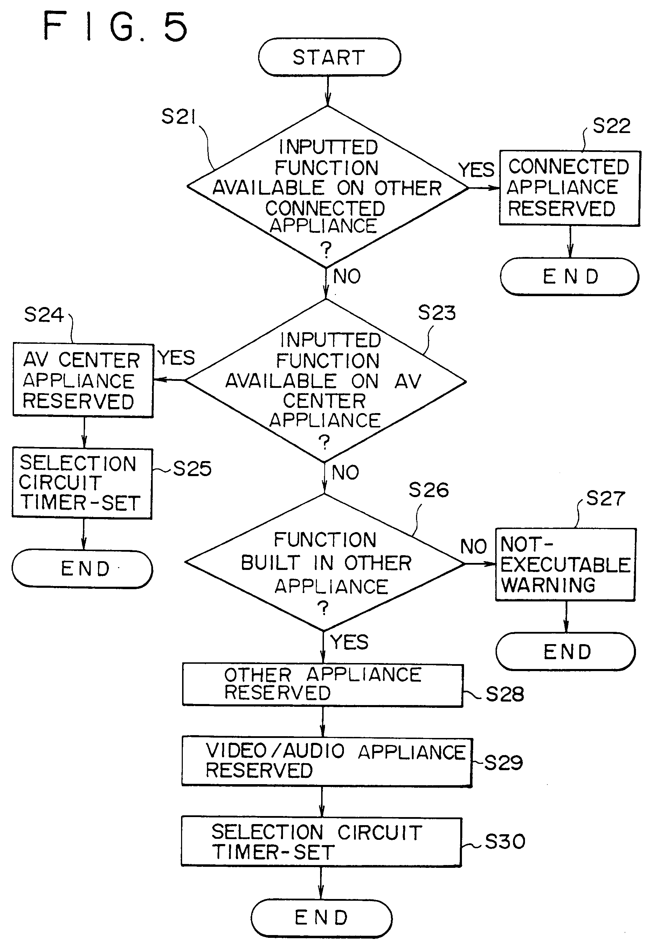

It will now be explained along with a flow chart shown in Fig. 5 how the audio-visual control apparatus is operated by the input section 111 in order to execute, for example, the following timer settings:

| | | | |
|---|---|---|---|
| 1 | 10:00-11:00 | VHF8CH | VTR123 |
| 2 | 12:00-13:00 | BS5CH | VTR124 |
| 3 | 12:00-13:00 | BS3CH (Audio) | DAT122 |
| 4 | 17:00-18:00 | FM2CH (Audio) | DAT122 |

In other words, VHF Channel 8 video signals are to be recorded on the VTR 123 from 10:00 to 11:00; BS Channel 5 video signals on the VTR 124 from 12:00 to 13:00; BS Channel 3 audio signals on the DAT 122 from 12:00 to 13:00 and FM Channel 2 audio signals on the DAT 122 from 17:00 to 18:00.

When the above timer setting data are input from the input section 111, the CPU 107 causes the RAM 109 to temporarily store them in memory. All the functions of the connected external electronic appliances, including the LDP 121, the DAT 122 and the VTRs 123 and 124 which are connected to the selection circuit 106, and all the built-in electronic appliances, including the BS tuner 103, the VHF tuner 104 and the FM tuner 105, are pre-memorized in the RAM 109. The memorized data, to be initialized and set up by a user by operating the input section 111, are protected not to be erased when the power source of the AV center 101 is turned off.

In the timer setting process, it is first judged whether a function inputted for its time-set execution can be executed by a connected external electronic appliance selected for. For instance, it is judged whether the VTR 123 has a built-in VHF tuner or not or whether the VTR 123 has video recording capability or not. When the inputted function is judged as available, the process shifts to Step S22 to write in the RAM 109 to cause the selected electronic appliance to execute the inputted function (timer-set).

When a function inputted for its timer-set execution is judged as not executable on a connected external electronic appliance selected for (when the VTR 123 has no built-in VHF tuner, for instance), the process shifts to Step S23 to judge whether the function is executable on an electronic appliance built in the AV center 101. When the function is judged as available on either one of the built-in electronic appliances, that built-in electronic appliance is reserved in Step S24 (for instance, the VHF tuner 104 is reserved). In Step S25, the selection circuit 106 is timer-set to execute a desired connection (to feed output signals from the VHF tuner 104 to the VTR 123 from 12:00 to 13:00, for instance).

When a function inputted for its time-set execution is judged as not available on either one of electronic appliances built in the AV center 101 (when the AV center 101 has no built-in VHF tuner, for instance), the process shifts to Step S26 to judge whether there is any other connected external electronic appliance available to execute the function (whether other VTR 124 has a built-in VHF tuner, for instance). When any one of other connected external electronic appliances has no capability to execute the function (when neither one of the LDP 121, the DAT 122 and the VTRs 123 and 124 has a built-in VHF tuner, for instance), the process shifts to Step S27 to display on the display section 110 that the inputted function is not available (not executable on the VTR 123 to record video signals on VHF Channel 8, for instance). When the function itself is executable but already reserved for the same period of time, the function is displayed as not executable.

When the function is judged in Step S26 as executable on either one of other connected external electronic appliances (when the VTR 124 has a built-in VHF tuner, for instance), that appliance (a VHF tuner built in the VTR 124) is reserved in Step S28 and an electronic appliance timer-set to record video or audio signals (namely the VTR 123) reserved in Step S29. In Step S30, the selection circuit 106 is timer-set for the required connection (to feed output signals from the VHF tuner of VTR 124 to VTR 123).

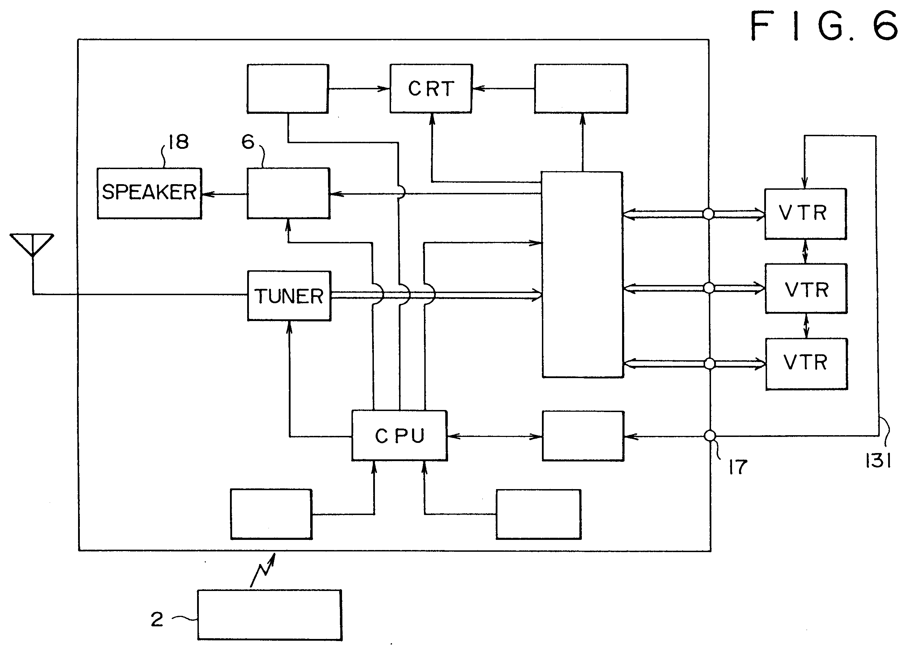

Fig. 6 shows an AV system employing a method according to the present invention to confirm appliance addresses. In this embodiment, eight VTRs 13A to 13H are connected to the control section 9 of the AV center, that is the TV set 1, through a D2B (digital data bus) bus (AV bus) 131. Audio signals and video signals from VTRs 13A to 13H are fed to the selection section 8 through terminals AV1 to AV8.

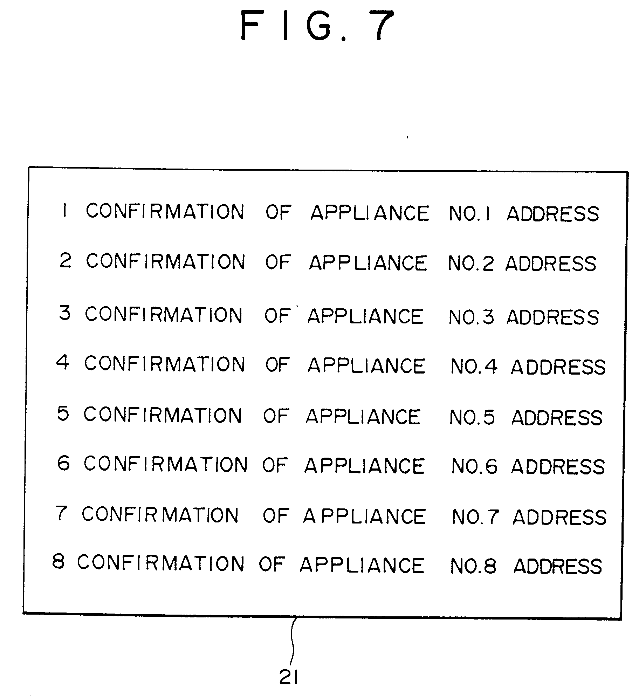

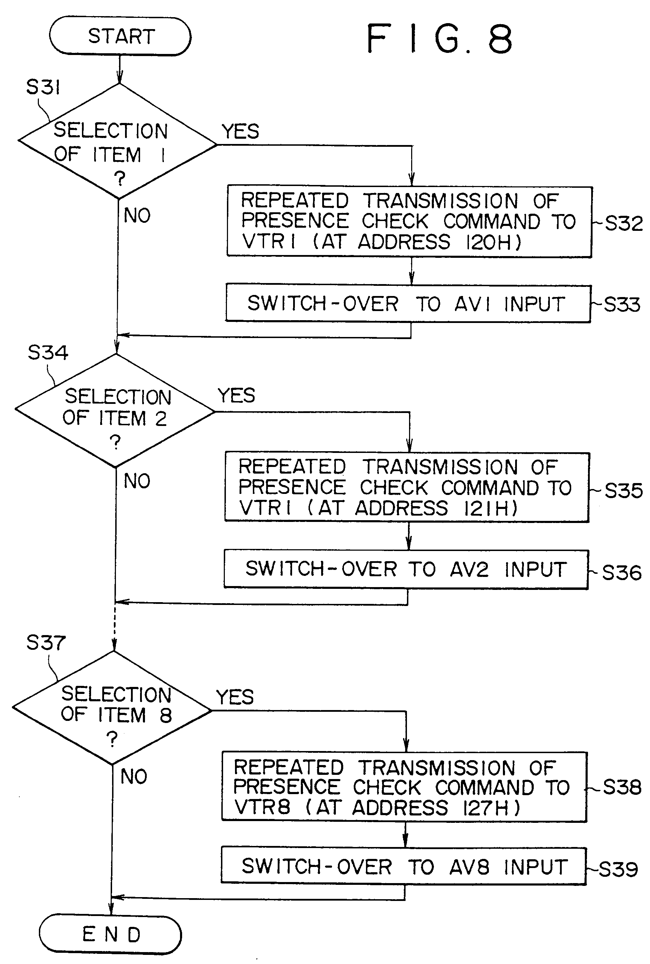

Fig. 7 shows a address confirming menu to be displayed on the CRT 10 shown in Fig. 6 and Fig. 8 shows an address-confirming process, namely the operation of the AV system shown in Fig. 6. When the first item on the address-confirming menu showing Appliance No. 1 (namely the VTR 13A) is selected by a cursor operated from either the remote controller 2 or the input section 4 (Yes in Step S31), the CPU 5 in the AV center 1 repeatedly sends a presence check command to an address of the smallest value 120H (H represents hexadecimal notation) assumed as allocated to Appliance No. 1 or the VTR 13A through the D2B bus 131 (Step S32).

A presence check command is to command a master appliance (the AV center 1 in the above embodiment) to "respond." An appliance receiving this command indicates to the user with a display or sound that it is "receiving a presence check command."

Upon its reception of a presence check command, Appliance No. 1 or the VTR 13A keeping its address allocated at 120H when switched on in a normal manner bleeps and flashes an LED on its front panel, indicating that an address at 120H is allocated to it. When the CPU 5 controlling the selection section 8 sends to the CRT 10 signals inputted to the terminal AV1, output video signals from the VTR 13A, including characters, are displayed on the CRT 10 to indicate its reception of a presence check command (Step S33). Therefore, the user can confirm that an address at 120H is allocated to the VTR 13A.

When an appliance (namely the VTR 13A) other than the assumed appliance is receiving a presence command, the address of that appliance is changed to other address by means of a dip switch or button and the assumed appliance (namely the VTR 13A) re-addressed by means of a dip switch or a button to an address allocated to Appliance No. 1, namely at 120H, to receive a presence check command.

When the second item on the address-confirming menu showing Appliance No. 2 (namely the VTR 13B) is selected next by a cursor operated from either the remote controller 2 or the input section 4 (Yes in Step S34), the CPU 5 in the AV center 1 repeatedly sends a presence check command through the D2B bus 131 to an address of the second smallest value 121H assumed as allocated to Appliance No. 2 or the VTR 13B (Step S35).

Upon its reception of a presence check command, Appliance No. 2 or the VTR 13B keeping its address allocated at 121H when switched on in a normal manner bleeps and flashes an LED on its front panel, indicating that an address at 121H is allocated to it. When CPU 5 controlling the selection section 8 sends to the CRT 10 signals inputted to the terminal AV2, output video signals from the VTR 13B, including characters, are displayed on the CRT 10 to indicate its reception of a presence check command (Step S36). Therefore, a user can confirm that an address at 121H is allocated to the VTR 13A.

When an appliance other than the assumed appliance (namely VTR 13B, for instance) is receiving a presence command, the address of that appliance is changed to other address by means of a dip switch or button and the assumed appliance (namely VTR 13B) readdressed by means of a dip switch or a button to an address allocated to Appliance No. 2, namely at 121H, to receive a presence check command.

Following this, the address-confirming operation is executed in a similar manner with respect to Item 3 to 8 (namely the VTRs 13C to 13H) on the address-confirming menu shown in Fig. 6 to confirm their respective addresses (Steps S37, S38 and S39).

It may be possible to set addresses for all appliances by changing their respective dip switches or by pressing their own respective address set-up buttons before their address before the address confirmation. Such appliances of the same category may be allocated addresses (addresses can be allocated to up to eight units of each category) from the smallest value in order their power source switches (main power switches) are turned on in order of their connection to the power outlet (in case of appliances which are set into their stand-by mode when they are connected to the power outlet).

Furthermore, address setting may also be effected by first initializing all VTRs to the address 120H upon their switching-on and sending out a presence check command through the D2B bus to a group of appliances of the same category addressed at 120H to let all VTRs flash LEDs on their front panels. Then, CPU 5 in the AV center 1 sends out a message to the CRT 10 through the message circuit 12 to display that the address 120H can be allocated to a VTR by operating its initialization button. Thus, that address is allocated to a VTR of which the initialization button is operated in response to the command. The address-allocated VTR then sends a command to other remaining VTRs addressed at 120H to set their address at 121H.

The CPU 5 in the AV center 1 then sends a presence check command through the D2B bus to a group of appliances with the 121H address. Upon their reception of this command, the remaining VTRs flash LEDs on their front panels. Then, CPU 5 in the AV center 1 sends out a message to the CRT 10 through the message circuit 12 to display that the address 121H can be allocated to a VTR by operating its initialization button. Thus, that address is allocated to a VTR of which the initialization button is operated in response to the command. The address-allocated VTR sends out a command to other remaining VTRs addressed at 121H to set their address at 122H. This process is repeated until all VTRs connected to the D2B bus are cleared through. In the last step of the process, an attempt by the last address-set VTR to send an address set command is responded to with a transmission error as no other VTR with the same address as its address is connected to the bus or remaining on the system. The last VTR thus enabled to judge that no other VTRs are connected to the bus notifies to the AV center 1 through the bus D2B that there is no other VTR remaining on the system with the same address.

In the above-described embodiment, VTRs are used as an example of plural appliances of the same category which can be any appliances of other types such as LDPs, for example.

Furthermore, the present invention can be employed for not only AV appliances but a plurality of appliances of the same category connected to a bus.

In an audio-visual control apparatus according to the present invention, a control means controls appliances outputting video signals, a selection means selects video output signals and a display means displays an image corresponding to video signals selected by the selection means. Furthermore, the displays means displays in a predetermined area an image corresponding to video signals outputted from an appliance controlled by the control section.

In an audio-visual control apparatus according to the present invention, an appliance is selected by comparing an inputted command and memorized functions of electronic appliances. Thus, a user can make a desirable function available simply by designating and inputting its corresponding command. Therefore, it is not necessary for a user to remember functions of all appliances and even to designate an appliance to provide a desired function, depending on cases. Thus, an audio-visual control apparatus according to the present invention is assured of a high degree of operability.

In an address-confirming method according to the present invention, check commands are sent out to addresses of a plurality of appliances of the same category through a bus to confirm the allocation of addresses to appliances responding to the commands. While thus made easy, the address setting according to the invention not requiring addresses to be allocated to appliances in order they are powered on is flexible. Having now fully described the invention, it will be apparent to one of ordinary skill in the art that many changes and modifications can be made thereto without departing from the scope of the invention as set forth in the appended claims.

## Claims

1. An audio-visual control apparatus comprising:
control means (5) connected to a plurality of audio-visual appliances (7, 13, 14) for sending control commands to each of said audio-visual appliances; and
selection means (8) connected via respective inputs (15, 16) to each of said plural audio-visual appliances for selecting one of said inputs and thereby one of the output signals of said audio-visual appliances; and
means (10), connected to said selection means, for displaying the selected one of said outputs of said appliances; characterised by
means (12), connected to said control means, for displaying the name of an appliance whose output is considered to be connected to the input selected by said selection means, so as to identify the displayed output.

2. An audio-visual control apparatus according to claim 1 further comprising
memory means (109) for storing functions of said plurality of said appliances;
entering means (111) for entering command to said appliances; and
means (107, 125) connected to said entering means and said memory means to selectively apply desired functions to said audio-visual control apparatus.

3. An audio-visual control apparatus according to claim 1 or 2 further comprising
control means (125) connected to each of a plurality of appliances of the same category; and
means installed in each of said appliances for responding to a presence command transmitted from said control means.

4. An audio-visual control apparatus as cited in claim 1, 2 or 3 wherein said selected one of the outputs is displayed in a display window (22).

## Patentansprüche

1. Audiovisuelle Steuervorrichtung mit einer Steuereinrichtung (5), die mit einer Vielzahl von audiovisuellen Geräten (7, 13, 14) zur Aussendung von Steuerbefehlen an jedes der betreffenden audiovisuellen Geräte verbunden ist,
mit einer Auswahleinrichtung (8), die über entsprechende Eingänge (15,16) mit jedem der in der Vielzahl vorgesehenen audiovisuellen Geräte verbunden ist zur Auswahl eines der genannten Eingänge und damit zur Auswahl eines der Ausgangssignale der betreffenden audiovisuellen Geräte
und mit einer mit der betreffenden Auswahleinrichtung verbundenen Einrichtung (10) zur Anzeige des ausgewählten Ausgangs der betreffenden Ausgänge der genannten Geräte,
**dadurch gekennzeichnet,**
dass mit der genannten Steuereinrichtung eine Einrichtung (12) verbunden ist zur Anzeige des Namens eines Gerätes, dessen Ausgang mit dem durch die genannte Auswahleinrichtung ausgewählten Eingang als verbunden betrachtet wird, derart, dass der angezeigte Ausgang identifiziert ist.

2. Audiovisuelle Steuervorrichtung nach Anspruch 1, umfassend ferner eine Speichereinrichtung (109) zur Speicherung von Funktionen der betreffenden Vielzahl von Geräten,
eine Eingabeeinrichtung (111) für die Eingabe eines Befehls in die genannten Geräte
und eine mit der genannten Eingabeeinrichtung und der genannten Speichereinrichtung verbundene Einrichtung (107, 125) zur selektiven Abgabe von gewünschten Funktionen an die betreffende audiovisuelle Steuervorrichtung.

3. Audiovisuelle Steuervorrichtung nach Anspruch 1 oder 2, umfassend ferner eine Steuereinrichtung (125), die mit jedem der in einer Vielzahl vorgesehenen Geräte derselben Kategorie verbunden ist, und eine in jedem der genannten Geräte installierte Einrichtung, die auf einen von der genannten Steuereinrichtung übertragenen Präsenzbefehl anspricht.

4. Audiovisuelle Steuervorrichtung nach Anspruch 1, 2 oder 3, wobei der ausgewählte eine Ausgang der Ausgänge in einem Anzeigefenster (22) angezeigt wird.

## Revendications

1. Dispositif de commande d'appareil audiovisuel comprenant :
un moyen de commande (5) connecté à une pluralité d'appareils audiovisuels (7, 13, 14) pour envoyer des commandes de contrôle sur chacun desdits appareils audiovisuels ;
un moyen de sélection (8) connecté via des entrées respectives (15, 16) à chacun desdits plusieurs appareils audiovisuels pour sélectionner l'une desdites entrées et par conséquent l'un des signaux de sortie desdits appareils audiovisuels ; et
un moyen (10) connecté audit moyen de sélection pour afficher celle sélectionnée desdites sorties desdits appareils,
caractérisé par :
un moyen (12) connecté audit moyen de commande pour afficher le nom d'un appareil dont la sortie est considérée comme étant connectée à l'entrée sélectionnée par ledit moyen de sélection de manière à identifier la sortie affichée.

2. Dispositif de commande d'appareil audiovisuel selon la revendication 1, comprenant en outre :
un moyen de mémoire (109) pour stocker des fonctions de ladite pluralité desdits appareils ;
un moyen d'entrée (111) pour entrer une commande sur lesdits appareils ; et
un moyen (107, 125) connecté audit moyen d'entrée et audit moyen de mémoire afin d'appliquer de façon sélective des fonctions souhaitées sur ledit dispositif de commande d'appareil audiovisuel.

3. Dispositif de commande d'appareil audiovisuel selon la revendication 1 ou 2, comprenant en outre :
un moyen de commande (125) connecté à chacun d'une pluralité d'appareils de la même catégorie ; et
un moyen installé dans chacun desdits appareils pour répondre à une commande de présence transmise depuis ledit moyen de commande.

4. Dispositif de commande d'appareil audiovisuel selon la revendication 1, 2 ou 3, dans lequel ladite une sélectionnée des sorties est affichée dans une fenêtre d'affichage (22).
